# EUROPEAN PATENT SPECIFICATION

(11) **EP 1 500 094 B1**
(45) Date of publication and mention of the grant of the patent: **25.10.2006**
(21) Application number: 03712494.8
(22) Date of filing: 01.04.2003
(51) Int. Cl.: G11B 7/24, G11B 7/00

(54) **DUAL STACK OPTICAL DATA STORAGE MEDIUM**
DOPPELSCHICHTIGES OPTISCHES DATENAUFZEICHNUNGSMEDIUM
SUPPORT DE STOCKAGE DE DONNEES OPTIQUE A DOUBLE EMPILEMENT

(30) Priority: 02.04.2002 EP 02076287; 13.12.2002 EP 02080276
(43) Date of publication of application: 26.01.2005
(73) Proprietor: Koninklijke Philips Electronics N.V., 5621 BA Eindhoven (NL)
(72) Inventor: VAN DEN OETELAAR, Ronald, J., A., NL-5656 AA Eindhoven (NL); MARTENS, Hubert, C., F., NL-5656 AA Eindhoven (NL)
(74) Representative: van Liempd, Jan
(86) International application number: PCT/IB2003/001290
(87) International publication number: WO 2003/083851

(56) References cited:
- EP-A- 0 613 127
- EP-A- 1 162 613
- EP-A- 1 178 478
- WO-A-03/009281
- US-A- 5 726 970
- US-A1- 2002 018 870

## Description

The invention relates to a dual stack optical data storage medium for recording and reading by means of a focused radiation beam entering the medium through a first radiation beam entrance face, said medium having at least a first substrate with on at least one side of the first substrate:
- a first layer stack, comprising a first information layer,
- a second layer stack, comprising a second information layer, said first layer stack being present at a position closer to the first radiation beam entrance face than the second layer stack,
- a first transparent spacer layer between the first layer stack and the second layer stack.

An embodiment of an optical recording medium as described in the opening paragraph is known from Japanese Patent Application JP-11066622.

Digital Versatile Disc read only (DVD-ROM) has proven to be a very successful optical storage medium. The DVD-ROM standard specification describes both a single-stack disk (type A; data capacity = 4.7 GB) as well as a dual-stack disk (type C; data capacity = 8.5 GB). A write once and/or rewritable medium which is compatible with the type A and type C DVD-ROM standard is highly desirable. Furthermore, a double-sided version of the single-stack disk (type B; data capacity = 9.4 GB) and a double-sided version of the dual-stack disk (type D; data capacity =17.0 GB) are described. Recordable and/or rewritable media which are compatible with the DVD-ROM standard are highly desirable. Recently a new format has been introduced called Blu-ray Disc (BD) with even a higher storage capacity. This system uses a blue radiation beam wavelength and a relatively high numerical aperture of the focused radiation beam. For this format also write once (R) and rewritable (RW) versions will be introduced.

For the single-stack DVD (type A) a compatible recordable format (DVD+R) and a nearly compatible rewritable format (DVD+RW) have been defined. For the dual-stack DVD (type C), a compatible dual-stack recordable DVD(+R) medium based on dye materials is described in non-prepublished European Patent Application no. 02075226.7 (PHNL020086) and published in WO2003/060895-Al (PHNL030043) filed by the present applicant. A dual-stack rewritable DVD(+RW) medium is also feasible, but it seems that such a medium cannot be made compatible with the DVD-ROM standard, because of the limited reflection and transmission of the rewritable materials, e.g. phase-change materials, that are used.

The increase in data capacity of a dual-stack DVD+R compared to a single-layer DVD+R and its compatibility with read only standards are clear advantages. However a disadvantage is that it is rather cumbersome to provide such a disc with prerecorded data. Furthermore, data which has become obsolete cannot be overwritten.

WO 03/0009281-A2 (priort art under Article 54(3) EPC) describes a method for creating optical data storage discs comprising providing a substrate and creating information layers on both sides of the substrate using a simultaneous two-sided rolling bead process.

EP 1 162 613-A2 reflecting the preamble of independent claim 1 discloses a multi-layer information medium which has at least two information-storing layers such as recording layer, and a method for making such medium. The object is to realize excellent reading properties in all of the information storing layers in the multi-layer information medium having a plurality of information-storing layers formed therewith.

EP 1 178 478 A2 discloses a dual stack optical storage medium with a substrate surface facing the data layer which is convex and a spacer layer or protective laver. US 5 726 970 discloses a multi layer optical storage medium with a first ROM type information storage layer and a second rewritable information storage layer. The storage layers are read out through a substrate.

It is an object of the invention to provide a dual stack optical data storage medium of the type mentioned in the opening paragraph which is compatible with a dual stack ROM version of said medium and has a rewritable portion or read only portion.

This object is achieved by a dual stack optical data storage medium according to the invention which is characterized in that the first information layer is one selected from the group of types consisting of a read only layer and a write once layer, and that the second information layer is one selected from the group of types consisting of a read only layer, a write once layer and a rewritable layer, and that the type of the first information layer is different from the type of the second information layer and that the first radiation beam entrance face is in a first protective cover layer separate from the first substrate.

Applicant has recognized that the problem with a dual-stack recordable, i.e. write once, medium is that prerecorded read only data, which a manufacturer would desire to put on such a medium, have to be written sequentially medium by medium. This problem is solved by providing a medium wherein one of the first and second information layers is a read only layer with preembossed information as, e.g., in a normal DVD-ROM. A further problem is that an end user who desires to add his own information will not be able to erase this information anymore. Applicants have further recognized that with a combination of different types of recording layers according to the invention it still is possible to achieve a dual stack medium compatible with the dual layer (= stack) DVD ROM standard. It is important to recognize that the first information layer cannot be a rewritable layer because than the requirements on effective reflection, i.e. compatible with a dual stack ROM version, of both stacks cannot be met anymore. A suitable rewritable layer has too little optical transmission, i.e. too much absorption, in order to achieve this compatibility. E.g. an important parameter of the type C DVD-ROM standard is the reflectivity of the storage layers, which must be between 18% and 30% for each of the two layers. Consequently, the first information layer closest to the radiation beam entrance face of a compatible DVD+R+RW medium should have a high transmission, sufficient reflection and low absorption. These criteria can be met for a write once layer based on e.g. dye materials or a read only layer, but cannot be met for a rewritable layer, which has a relatively high optical absorption. In other words, the first information layer is a write once (e.g. a dye based layer with a relatively low absorption) layer or read only ROM layer (low absorption), while the second information layer is a relatively highly reflective rewritable layer, e.g. based on phase-change materials or other erasable materials like magneto-optical materials. It should be noted that for the write once layer any type of layer with a relatively low absorption at the radiation beam wavelength is suitable and that the write once layer of the invention is not restricted to dye layers. Recently, there is a tendency to use objective lenses which have a relatively high numerical aperture (NA) for focusing the radiation beam. This enables a smaller optical spot which allows a higher data density. For this system it is preferred to focus the radiation beam through a relatively thin transparent cover layer of the order of some tens of millimeters or less, e.g. 100µm, The advantage is that such a relatively thin cover layer makes the focused optical spot less susceptible to optical aberrations by tilt of the optical medium and further that the objective may have a relatively small focus distance with still enough free working distance (FWD) for the objective to operate.

In an embodiment the second information layer is a rewritable layer. The advantage of such a medium is that half of the disk capacity can be rewritten. A very promising application is e.g. the use of a write once (R) + rewritable (RW) dual-stack DVD medium for storage of e.g. high-quality home videos. The raw video material, e.g. from a portable camcorder, can be stored on the write once layer, and if required by data capacity also partly on the rewritable layer, while the editing and/or scene selection information can be stored and rewritten, i.e. can be easily modified, on the rewritable layer. Or alternatively, a prerecorded example movie with video editing software may be provided on a read only layer and the end user puts his own raw material on the rewritable layer and edits it with the software, after practising with some examples, and subsequently records the edited version on the rewritable layer. The raw material may be erased in order to save space. The proposed example is compatible with the type C DVD-ROM standard, which implies that it can be played back on any DVD-player and DVD-recorder.

In yet another embodiment the medium further comprises a second radiation beam entrance face opposite from the first radiation beam entrance face and a third layer stack, comprising a third information layer selected from the group consisting of a read only layer and a write once layer, a fourth layer stack, comprising a fourth information layer selected from the group consisting of a read only layer, a write once layer and a rewritable layer, said third layer stack being present at a position closer to the second radiation beam entrance face than the fourth layer stack, a second transparent spacer layer between the third layer stack and the fourth layer stack, and that the type of the third information layer is different from the type of the fourth information layer.

The maximum data capacity of a single-sided dual-stack optical data storage medium is limited, e.g. to 8.5 GB for DVD. In order to store two versions of a movie in DVD format, including extra features, on one disc, e.g. a full-screen and wide-screen version as is commonly done for movies distributed in the U.S., 8.5 GB of storage capacity is generally insufficient. Therefore a compatible double-sided dual-stack optical recording medium medium is proposed. The proposed medium is compatible with its read only version, e.g. the type D DVD-ROM standard and consequently has a doubled total storage capacity, e.g. 17.0 GB in case of the type DVD-ROM. The double-sided dual-stack optical data storage medium may consist of two write once information layers and two rewritable information layers, e.g. DVD+R+RW. The two rewritable layers are located in between the write once layers, for reason of differences in optical properties between rewritable, e.g. phase-change, and write once, e.g. dye materials, as described above. One of the write once layers and one of the rewritable layers can be accessed from one side of the disc, while the other two layers can be accessed from the other side of the disc.

In case of the dual sided dual stack DVD-ROM compatible embodiments the first and second radiation beam entrance faces are in the first and a second substrate respectively.

In a special embodiment the second radiation beam entrance face is in the first substrate and the first radiation beam entrance face is in a first protective cover layer separate from the first substrate. This embodiment combines a relatively low density dual stack format on one side of the medium with a high density dual stack format on the other side. E.g. a combined DVD / BD.

In another embodiment the second radiation beam entrance face is in a second protective coverlayer and the first radiation beam entrance face is in a first protective cover layer separate from the first substrate. In this case protective cover layers are present on both sides of the dual sided dual stack optical data storage medium. At least the first substrate is present between the second and the fourth layer stack. A second substrate may be present adjacent the first substrate. The latter may occur when the the two sides of the medium are produced separately and connected together at a later stage in the production process by bonding the first substrate to the second substrate.

For an optical data storage medium compatible with the dual stack DVD-ROM specification the effective reflection level of the stacks is at least 0.18 at a radiation beam wavelength of approximately 655 nm.

For an optical data storage medium compatible with the dual stack BD specification the effective reflection level of the stacks ranges from 0.04 to 0.08 for dual-layer BD-RW and 0.12 to 0.24 for single-layer BD-RW, at a radiation beam wavelength of approximately 405 nm.

For a double sided optical data storage medium compatible with the dual stack DVD-ROM on one side and the dual stack BD specification on the other side the effective optical reflection level of the first and second stack is at least 0.18 at a radiation beam wavelength of approximately 655 nm and the effective optical reflection level of the third and fourth stack is at least 0.04 at a radiation beam wavelength of approximately 405 nm.

The invention will be elucidated in greater detail with reference to the accompanying drawings, in which
Fig. 1 shows a schematic layout of an embodiment of a dual-stack optical data storage medium according to the invention,
Fig. 2 shows a schematic layout of another embodiment of a dual-stack optical data storage medium according to the invention,
Fig. 3 shows a schematic layout of an embodiment of a double sided dual-stack optical data storage medium according to the invention,
Fig. 4 shows a schematic layout of another embodiment of a double sided dual-stack optical data storage medium according to the invention.

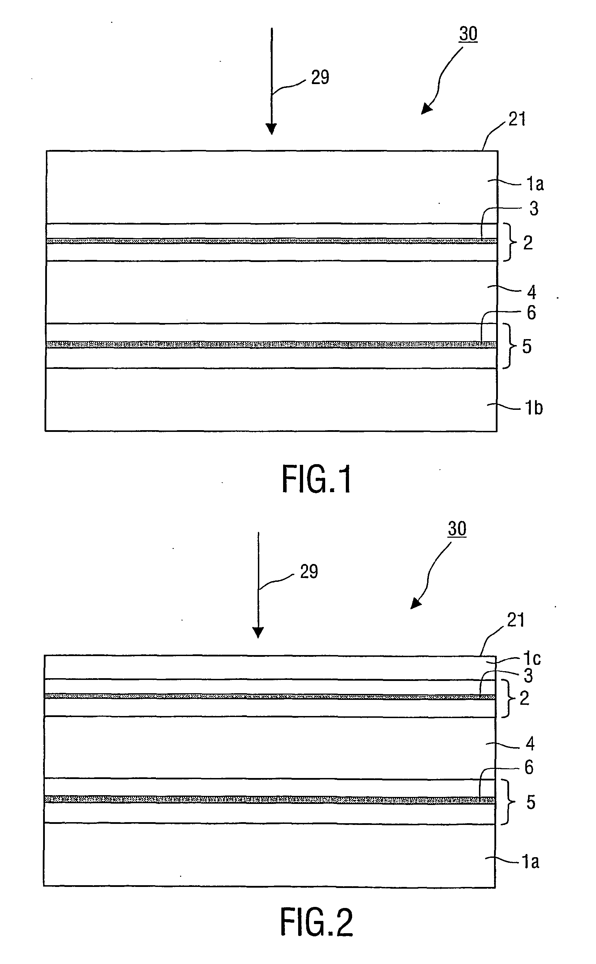

In Fig. 1 a dual stack optical data storage medium 30 for recording and reading by means of a focused radiation beam 29 is shown. The radiation beam 29 enters the medium 30 through a first radiation beam entrance face 21. The medium has at least a first substrate 1a with on at least one side of the first substrate 1a a first layer stack 2, comprising a first information layer 3, a second layer stack 5, comprising a second information layer 6. The first layer stack 2 is present at a position closer to the first radiation beam entrance face than the second layer stack 5. A first transparent spacer layer 4 is present between the first layer stack 2 and the second layer stack 5. The first information layer 3 is a write once layer, and the second information layer 6 is a rewritable layer. The embodiment will now be discussed in more detail.

Substrate 1a has a servo pregroove or guide groove pattern in its surface at the side of the first layer stack 2 and is made of polycarbonate (n = 1.58) and has a thickness of 580 µm. The servo pregroove is used for guiding the focused radiation beam 29 during recording and/or read out. First layer stack 2 is a write once stack comprising a first information layer 3 made of a cyanine dye or azo dye (n = 2.2; k = 0.01) having a thickness of 90 nm. The dye may be deposited by spincoating or evaporation. A semi transparent reflective layer of Au (n = 0.28; k = 3.9) having a thickness of 8 nm is present between the first information layer 3 and the spacer layer 4 and deposited by e.g. sputtering. The first transparent spacer layer 4 is made of an UV-curable resin or a pressure-sensitive adhesive (PSA) (n =1.5) with a thickness of 40 - 60 µm. The second layer stack 5 comprises, in this order, a first dielectric layer made of ZnS/SiO2 (80 : 20) (n = 2.15) having a thickness of 135 nm and deposited by sputtering, a rewritable recording layer made of a phase-change GeInSbTe alloy (crystalline: n = 2.9; k = 4.8) having a thickness of 12 nm and deposited by sputtering, a second dielectric layer made of ZnS/SiO2 (80 : 20) (n = 2.15) having a thickness of 23 nm and deposited by sputtering, a reflective layer made of Al(n= 1.97; k = 7.83) having a thickness of 100 nm and deposited by sputtering. A second substrate 1b, made of polycarbonate (n = 1.58) and having a thickness of 580 µm, is present adjacent the second layer stack 5. The substrate 1b has a servo pregroove or guide groove pattern in its surface at the side of the second layer stack 5.
The listed optical parameters n and k are for λ = 655 nm which is the radiation beam wavelength. The calculated reflection and transmission are:
First layer stack 2:
   Reflection (R1) = 20.2%
   Transmission (T1) = 64.1%
   Effective reflection from first layer stack 2: = R1 = 20.2%
Second layer stack 5:
   Reflection (R2) = 49.1%
   Effective reflection from second layer stack 5: = T1 x T1 x R1 = 20.2%
The effective reflection of both layers is in full compliance with the DVD-ROM standard: 18%<R<30%.

In Fig. 2 a dual stack optical data storage medium 30 for recording and reading by means of a focused radiation beam 29 is shown. The radiation beam 29 enters the medium 30 through a first radiation beam entrance face 21. The medium has a transparent cover layer 1c. On a first substrate 1a is present a first layer stack 2, comprising a first information layer 3, a second layer stack 5, comprising a second information layer 6. The first layer stack 2 is present at a position closer to the first radiation beam entrance face 21 than the second layer stack 5. A first transparent spacer layer 4 is present between the first layer stack 2 and the second layer stack 5. The first information layer 3 is a write once layer, and the second information layer 5 is a rewritable layer. The embodiment will now be discussed in more detail.

Cover layer 1c is made of an UV curable resin and has a thickness of 100 µm and may be applied by spincoating and subsequent UV curing. First layer stack 2 is a write once stack comprising a first information layer 3 made of an organic pigment (n = 2.4; k = 0.02) having a thickness of 50 nm. The pigment may be deposited by spincoating or evaporation. Transparent dielectric layers of e.g. SiO2 (n =1.5; k = 0.0), not drawn, both having a thickness of 20 nm, are present between the first information layer 3 and the spacer layer 4 and between the first information layer 3 and the cover layer 1c. These layers are deposited by e.g. sputtering. The spacer layer 4 is made of an UV curable resin and has a thickness of 20 µm. A servo pregroove pattern is present in the first transparent spacer layer 4 at the side of the transparent SiO₂ layer. The second layer stack 5 comprises, in this order, a first dielectric layer made of ZnS/SiO2 (80 : 20) (n = 2.2) having a thickness of 50 nm and deposited by sputtering, a rewritable recording layer made of a phase-change GeInSbTe alloy (crystalline: n = 1.5; k = 3.5) having a thickness of 13 nm and deposited by sputtering, a second dielectric layer made of ZnS/SiO2 (80 : 20) (n = 2.2) having a thickness of 17 nm and deposited by sputtering, a reflective layer made of Ag (n = 0.08; k = 2.1) having a thickness of 120 nm and deposited by sputtering. The first substrate 1a is made of polycarbonate (n = 1.58) and has a thickness of 1100 µm and is provided with a servo pregroove or guide groove pattern at the side of the second layer stack 5.
The listed optical parameters n and k are for λ = 405 nm which is the radiation beam wavelength. The reflection and transmission are:
First layer stack 2:
   Reflection (R1) = 15%
   Transmission (T1) = 65%
   Effective reflection from first layer stack 2: = R1 =15%
Second layer stack 5:
   Reflection (R2) = 29%
   Effective reflection from second layer stack 5: = T1 x T1 x R1 =12%
The effective reflection of both layers is in full compliance with the single-layer BD-RW standard: 12% <R< 24%.

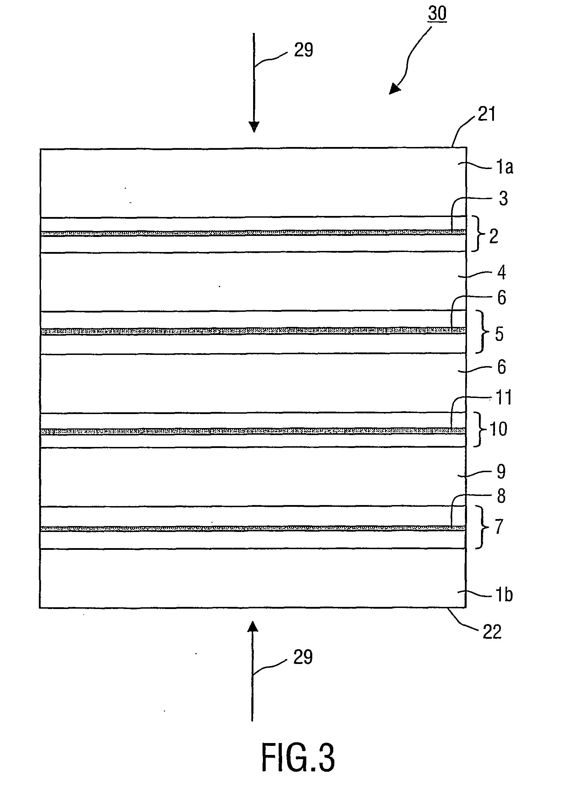

In Fig. 3 a double sided dual stack optical data storage medium 30 is shown compatible with the type D DVD-ROM standard. Reference numerals 1a, 21, 2, 3, 5, 6 correspond to the description of Fig. 1. The first transparent spacer layer 4 is made of an UV-curable resin and has a servo pregroove or guide groove pattern in its surface at the side of the second layer stack 5. Substrate 1b of Fig. 1 is replaced by a coupling layer 12. The medium further comprises a second radiation beam entrance face 22 opposite from the first radiation beam entrance face 21 for recording and reading in a third layer stack 7, comprising a third information layer 8, and a fourth layer stack 10, comprising a fourth information layer 11. The third layer stack 7 is present at a position closer to the second radiation beam entrance face 22 than the fourth layer stack 10. A second transparent spacer layer 9 is present between the third layer stack 7 and the fourth layer stack 10. The layers and stacks 1b, 7, 8, 9, 10 and 11 are identical to respectively the layers and stacks 1a, 2, 3, 4, 5, 6. Hence a dual sided dual stack medium is provided with identical design on both sides bonded together by coupling layer 12 which may be a PSA with a thickness of 20 - 300 µm. Depending on the thickness of the substrates 1a and 1b and the spacer layers 4 and 9, the thickness of the coupling layer 12 may be adjusted in order to have the total thickness of the medium 30 not exceed the maximum thickness as specified in the DVD disk standard, i.e. 1500 µm. The thickness range of the substrate however is also limited in order to prevent occurrence of excessive optical aberrations in the focused radiation beam 29 used for reading and writing in the information layers.

The pregroove (or guide groove) of the second layer stack 5 and the fourth layer stack 10 may also be present in the coupling layer 12 in which case the coupling layer may constitute a sheet of plastic with pregrooves on both sides. In this case, spacer layers 4 and 9 may constitute an UV-curable resin or pressure-sensitive adhesive (PSA) without pregroove.
The calculated reflection and transmission for λ = 655 nm are:
First layer stack 2 and third layer stack 7:
   Reflection (R1) = 20.2%
   Transmission (T1) = 64.1%
   Effective reflection from first or third layer stack 2 or 7: = R1 = 20.2%
Second layer stack 5 and fourth layer stack 10:
   Reflection (R2) = 49.1 %
   Effective reflection from second or fourth layer stack 5 or 10: = T1 x T1 x R1 = 20.2%
The effective reflection of both layers is in full compliance with the DVD-ROM standard: 18%<R<30%.

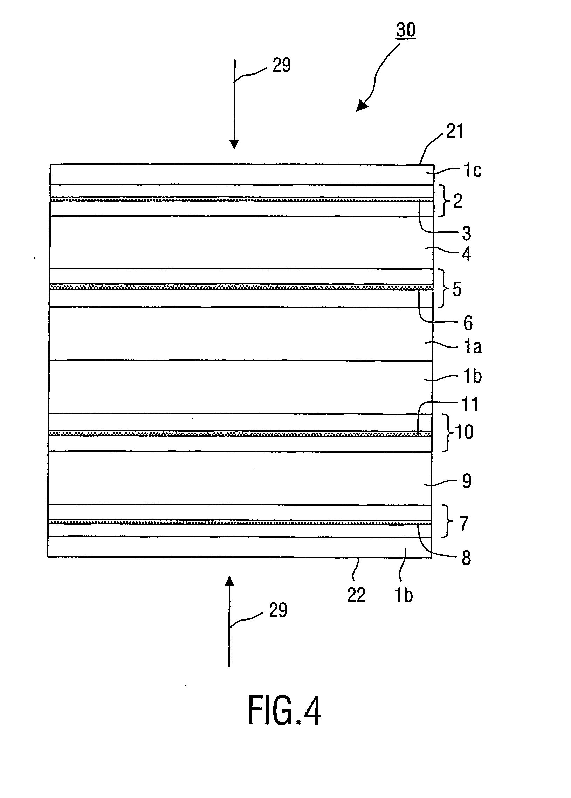

In Fig. 4 a double sided dual stack optical data storage medium 30 for recording and reading by means of a focused radiation beam 29 is shown. The radiation beam 29 enters the medium 30 through a first radiation beam entrance face 21. The medium has a transparent cover layer 1c. On a first substrate 1a is present a first layer stack 2, comprising a first information layer 3, a second layer stack 5, comprising a second information layer 6. The first layer stack 2 is present at a position closer to the first radiation beam entrance face 21 than the second layer stack 5. A first transparent spacer layer 4 is present between the first layer stack 2 and the second layer stack 5. The first information layer 3 is a write once layer, and the second information layer 5 is a rewritable layer. The embodiment will now be discussed in more detail.

Cover layer 1c is made of an UV curable resin and has a thickness of 100 µm and may be applied by spincoating and subsequent UV curing. First layer stack 2 is a write once stack comprising a first information layer 3 made of an organic pigment (n = 2.4; k = 0.02) having a thickness of 50 nm. The pigment may be deposited by spincoating or evaporation. Transparent dielectric layers of e.g. SiO2 (n = 1.5; k = 0.0), not drawn, both having a thickness of 20 nm, are present between the first information layer 3 and the spacer layer 4 and between the first information layer 3 and the cover layer 1c. These layers are deposited by e.g. sputtering. The spacer layer 4 is made of an UV curable resin and has a thickness of 20 µm. A servo pregroove pattern is present in the first transparent spacer layer 4 at the side of the transparent SiO₂ layer. The second layer stack 5 comprises, in this order, a first dielectric layer made of ZnS/SiO2 (80 : 20) (n = 2.2) having a thickness of 50 nm and deposited by sputtering, a rewritable recording layer made of a phase-change GeInSbTe alloy (crystalline: n = 1.5; k = 3.5) having a thickness of 13 nm and deposited by sputtering, a second dielectric layer made of ZnS/SiO2 (80 : 20) (n = 2.2) having a thickness of 17 nm and deposited by sputtering, a reflective layer made of Ag (n = 0.08; k = 2.1) having a thickness of 120 nm and deposited by sputtering. The first substrate 1a is made of polycarbonate (n = 1.58) and has a thickness of about 0.50 mm and is provided with a servo pregroove or guide groove pattern at the side of the second layer stack 5. The medium 30 further comprises a second radiation beam entrance face 22 opposite from the first radiation beam entrance face 21 and a third layer stack 7, comprising a third information layer 8 selected from the group consisting of a read only layer and a write once layer, and a fourth layer stack 10, comprising a fourth information layer 11 selected from the group consisting of a read only layer, a write once layer and a rewritable layer, said third layer stack 7 being present at a position closer to the second radiation beam entrance face 22 than the fourth layer stack 10, and a second transparent spacer layer 9 between the third layer stack 7 and the fourth layer stack 10. The type of the third information layer 8 is different from the type of the fourth information layer 11. A second substrate 1b is present. The second radiation beam entrance face 22 is in a second protective coverlayer 1d. The respective reference numerals 1d, 7, 8, 9, 10 , 11 and 1b correspond, mutatis mutandis, to the description of reference numerals 1c, 2, 3, 4, 5, 6 and 1a as described above. Substrate 1a and 1b are bonded together by known means. Substrate 1a and 1b may be combined as to form one single substrate in which case this substrate has a thickness of about 1.00 mm and has a pregroove in both sides of the single substrate.
The listed optical parameters n and k are for λ = 405 nm which is the radiation beam wavelength. The reflection and transmission are:
First layer stack 2 and third layers stack 7:
   Reflection (R1) = 15%
   Transmission (T1) = 65%
   Effective reflection from first layer stack 2 or 7: = R1 = 15%
Second layer stack 5 and fourth layer stack 10:
   Reflection (R2) = 29%
   Effective reflection from second layer stack 5 or 10: = T1 x T1 x R1 = 12%
The effective reflection of all stacks is in full compliance with the single-layer BD-RW standard: 12% < R < 24%.

It should be noted that the above-mentioned embodiment illustrates rather than limits the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

A dual stack optical data storage medium for recording and reading by means of a focused radiation beam is described. The beam enters the medium through a first radiation beam entrance face. The medium has at least a first substrate with on at least one side of the first substrate a first layer stack, comprising a first information layer, a second layer stack, comprising a second information layer and a first transparent spacer layer between the first layer stack and the second layer stack. The first layer stack is present at a position closer to the first radiation beam entrance face than the second layer stack. The first information layer is one selected from the group of types consisting of a read only layer and a write once layer, and the second information layer is one selected from the group of types consisting of a read only layer, a write once layer and a rewritable layer. The type of the first information layer is different from the type of the second information layer. Compatibility of the medium with read only standards is achieved while the advantages of writability and erasability are maintained. Double sided versions of the medium are also described having a third and fourth layer stack.

## Claims

1. A dual stack optical data storage medium (30) for recording and reading by means of a focused radiation beam (29) entering the medium (30) through a first radiation beam entrance face (21), said medium having at least a first substrate (1a) with on at least one side of the first substrate (1a):
- a first layer stack (2), comprising a first information layer (3),
- a second layer stack (5), comprising a second information layer (6), said first layer stack (2) being present at a position closer to the first radiation beam entrance face (21) than the second layer stack (5),
- a first transparent spacer layer (4) between the first layer stack (2) and the second layer stack (5), and the first information layer (3) is one selected from the group of types consisting of a read only layer and a write once layer, and the second information layer (6) is one selected from the group of types consisting of a read only layer, a write once layer and a rewritable layer, and the type of the first information layer (3) is different from the type of the second information layer (6), **characterized in that** the first radiation beam entrance face is in a first protective cover layer separate from the first substrate.

2. A dual stack optical data storage medium (30) as claimed in claim 1, wherein the second information layer (6) is a rewritable layer.

3. A dual stack optical data storage medium (30) as claimed in any one of claims 1 - 2, wherein the medium (30) further comprises a second radiation beam entrance face (22) opposite from the first radiation beam entrance face (21) and
- a third layer stack (7), comprising a third information layer (8) selected from the group consisting of a read only layer and a write once layer,
- a fourth layer stack (10), comprising a fourth information layer (11) selected from the group consisting of a read only layer, a write once layer and a rewritable layer, said third layer stack (7) being present at a position closer to the second radiation beam entrance face (22) than the fourth layer stack (10),
- a second transparent spacer layer (9) between the third layer stack (7) and the fourth layer stack (10), and that the type of the third information layer (8) is different from the type of the fourth information layer (11).

4. A dual stack optical data storage medium (30) as claimed in claim 3, wherein the second radiation beam entrance face (22) is in the first substrate (1a).

5. A dual stack optical data storage medium (30) as claimed in claim 3, wherein the second radiation beam entrance face (22) is in a second protective cover layer (1d).

6. A dual stack optical data storage medium (30) as claimed in any one of claims 3, or 5 wherein the fourth information layer (11) is a rewritable layer.

7. A dual stack optical data storage medium (30) as claimed in any one of claims 1, 2, 3 or 6, wherein the effective reflection level of the stacks is at least 0.18 at a radiation beam wavelength of approximately 655 nm.

8. A dual stack optical data storage medium (30) as claimed in any one of claims 1, 5 or 6, wherein the effective reflection level of the stacks is at least 0.04 at a radiation beam wavelength of approximately 405 nm.

9. A dual stack optical data storage medium (30) as claimed in any one of claims 4 or 6, wherein the effective reflection level of the first and second stack is at least 0.04 at a radiation beam wavelength of approximately 405 nm and the effective reflection level of the third and fourth stack is at least 0.18 at a radiation beam wavelength of approximately 655 nm.

## Patentansprüche

1. Doppelschichtiges optisches Datenaufzeichnungsmedium (30) zum Aufzeichnen und Lesen mittels eines fokussierten Strahlenbündels (29), das durch eine erste Strahlenbündel-Eintrittsfläche (21) in das Medium (30) eintritt, wobei das Medium mindestens ein erstes Substrat (1a) mit Folgendem auf mindestens einer Seite des ersten Substrats (1a) hat:
- einen ersten Schichtstapel (2), der eine erste Informationsschicht (3) umfasst,
- einen zweiten Schichtstapel (5), der eine zweite Informationsschicht (6) umfasst, wobei der erste Schichtstapel (2) an einer Position vorhanden ist, die näher an der ersten Strahlenbündel-Eintrittsfläche (21) ist als der zweite Schichtstapel (5),
- eine erste transparente Abstandsschicht (4) zwischen dem ersten Schichtstapel (2) und dem zweiten Schichtstapel (5), wobei die erste Informationsschicht (3) eine Schicht ist, die aus einer Gruppe von Typen ausgewählt ist, die aus einer schreibgeschützten Schicht und einer einmal beschreibbaren Schicht besteht, und die zweite Informationsschicht (6) eine Schicht ist, die aus der Gruppe von Typen ausgewählt ist, die aus einer schreibgeschützten Schicht, einer einmal beschreibbaren Schicht und einer wiederbeschreibbaren Schicht besteht, und der Typ der ersten Informationsschicht (3) sich vom Typ der zweiten Informationsschicht (6) unterscheidet, **dadurch gekennzeichnet, dass** die erste Strahlenbündel-Eintrittsfläche sich in einer ersten Schutzdeckschicht befindet, die vom ersten Substrat getrennt ist.

2. Doppelschichtiges optisches Datenaufzeichnungsmedium (30) nach Anspruch 1, wobei die zweite Informationsschicht (6) eine wiederbeschreibbare Schicht ist.

3. Doppelschichtiges optisches Datenaufzeichnungsmedium (30) nach einem der Ansprüche 1-2, wobei das Medium (30) ferner eine zweite Strahlenbündel-Eintrittsfläche (22), die sich entgegengesetzt zur ersten Strahlenbündel-Eintrittsfläche (21) befindet, und Folgendes umfasst:
- einen dritten Schichtstapel (7), der eine dritte Informationsschicht (8) umfasst, die aus der Gruppe ausgewählt ist, die aus einer schreibgeschützten Schicht und einer einmal beschreibbaren Schicht besteht,
- einen vierten Schichtstapel (10), der eine vierte Informationsschicht (11) umfasst, die aus der Gruppe ausgewählt ist, die aus einer schreibgeschützten Schicht, einer einmal beschreibbaren Schicht und einer wiederbeschreibbaren Schicht besteht, wobei der dritte Schichtstapel (7) an einer Position vorhanden ist, die näher an der zweiten Strahlenbündel-Eintrittsfläche (22) liegt als der vierte Schichtstapel (10),
- eine zweite transparente Abstandsschicht (9) zwischen dem dritten Schichtstapel (7) und dem vierten Schichtstapel (10), und wobei der Typ der dritten Informationsschicht (8) sich vom Typ der vierten Informationsschicht (11) unterscheidet.

4. Doppelschichtiges optisches Datenaufzeichnungsmedium (30) nach Anspruch 3, wobei die zweite Strahlenbündel-Eintrittsfläche (22) sich im ersten Substrat (1a) befindet.

5. Doppelschichtiges optisches Datenaufzeichnungsmedium (30) nach Anspruch 3, wobei die zweite Strahlenbündel-Eintrittsfläche (22) sich in einer zweiten Schutzdeckschicht (1d) befindet.

6. Doppelschichtiges optisches Datenaufzeichnungsmedium (30) nach einem der Ansprüche 3 oder 5, wobei die vierte Informationsschicht (11) eine wiederbeschreibbare Schicht ist.

7. Doppelschichtiges optisches Datenaufzeichnungsmedium (30) nach einem der Ansprüche 1, 2, 3 oder 6, wobei der effektive Reflexionspegel der Stapel bei einer Strahlenbündel-Wellenlänge von ungefähr 655 nm mindestens 0.18 beträgt.

8. Doppelschichtiges optisches Datenaufzeichnungsmedium (30) nach einem der Ansprüche 1, 5 oder 6, wobei der effektive Reflexionspegel der Stapel bei einer Strahlenbündel-Wellenlänge von ungefähr 405 nm mindestens 0.04 beträgt.

9. Doppelschichtiges optisches Datenaufzeichnungsmedium (30) nach einem der Ansprüche 4 oder 6, wobei der effektive Reflexionspegel des ersten und zweiten Stapels bei einer Strahlenbündel-Wellenlänge von ungefähr 405 nm mindestens 0.04 beträgt und der effektive Reflexionspegel des dritten und vierten Stapels bei einer Strahlenbündel-Wellenlänge von ungefähr 655 nm mindestens 0.18 beträgt.

## Revendications

1. Support d'enregistrement optique de données à double empilement (30) pour enregistrer et lire au moyen d'un faisceau de rayonnement focalisé (29) qui pénètre dans le support (30) au travers d'une première face d'entrée de faisceau de rayonnement (21), ledit support ayant au moins un premier substrat (1a) avec sur au moins un côté du premier substrat (1a) :
- un premier empilement de couches (2) qui comprend une première couche d'informations (3),
- un deuxième empilement de couches (5) qui comprend une deuxième couche d'informations (6), ledit premier empilement de couches (2) étant présent en une position plus proche de la première face d'entrée de faisceau de rayonnement (21) que le deuxième empilement de couches (5),
- une première couche d'espacement transparente (4) entre le premier empilement de couches (2) et le deuxième empilement de couches (5), et la première couche d'informations (3) est une sélectionnée parmi le groupe de types composé d'une couche en lecture seulement et une couche non réinscriptible, et la deuxième couche d'informations (6) est une sélectionnée parmi le groupe de types composé d'une couche en lecture seulement, une couche non réinscriptible et une couche réinscriptible, et le type de la première couche d'informations (3) est différent du type de la deuxième couche d'informations (6), **caractérisé en ce que** la première face d'entrée de faisceau de rayonnement est dans une première couche de couverture protectrice séparée du premier substrat.

2. Support d'enregistrement optique de données à double empilement (30) selon la revendication 1, dans lequel la deuxième couche d'informations (6) est une couche réinscriptible.

3. Support d'enregistrement optique de données à double empilement (30) selon une quelconque des revendications 1 ou 2, dans lequel le support (30) comprend en outre une deuxième face d'entrée de faisceau de rayonnement (22) du côté opposé par rapport à la première face d'entrée de faisceau de rayonnement (21) et
- un troisième empilement de couches (7) qui comprend une troisième couche d'informations (8) sélectionnée parmi le groupe composé d'une couche en lecture seulement et une couche non réinscriptible,
- un quatrième empilement de couches (10), comprenant une quatrième couche d'informations (11) sélectionnée parmi le groupe composé d'une couche en lecture seulement, une couche non réinscriptible et une couche réinscriptible, ledit troisième empilement de couches (7) étant présent en une position plus proche de la deuxième face d'entrée de faisceau de rayonnement (22) que le quatrième empilement de couches (10),
- une deuxième couche d'espacement transparente (9) entre le troisième empilement de couches (7) et le quatrième empilement de couches (10), et le type de la troisième couche d'informations (8) est différent du type de la quatrième couche d'informations (11).

4. Support d'enregistrement optique de données à double empilement (30) selon la revendication 3, dans lequel la deuxième face d'entrée de faisceau de rayonnement (22) est dans le premier substrat (1a).

5. Support d'enregistrement optique de données à double empilement (30) selon la revendication 3, dans lequel la deuxième face d'entrée de faisceau de rayonnement (22) est dans une deuxième couche de couverture protectrice (1d).

6. Support d'enregistrement optique de données à double empilement (30) selon une quelconque des revendications 3 ou 5, dans lequel la quatrième couche d'informations (11) est une couche réinscriptible.

7. Support d'enregistrement optique de données à double empilement (30) selon une quelconque des revendications 1, 2, 3 ou 6, dans lequel le niveau de réflexion effectif des empilements est d'au moins 0,18 à une longueur d'onde de faisceau de rayonnement d'environ 655 nm.

8. Support d'enregistrement optique de données à double empilement (30) selon une quelconque des revendications 1, 5 ou 6, dans lequel le niveau de réflexion effectif des empilements est d'au moins 0,04 à une longueur d'onde de faisceau de rayonnement d'environ 405 nm.

9. Support d'enregistrement optique de données à double empilement (30) selon une quelconque des revendications 4 ou 6, dans lequel le niveau de réflexion effectif des premier et deuxième empilements est d'au moins 0,04 à une longueur d'onde de faisceau de rayonnement d'environ 405 nm, et le niveau de réflexion effectif des troisième et quatrième empilements est d'au moins 0,18 à une longueur d'onde de faisceau de rayonnement d'environ 655 nm.
